# EUROPÄISCHE PATENTSCHRIFT

(11) **EP 2 652 418 B1**
(45) Veröffentlichungstag und Bekanntmachung des Hinweises auf die Patenterteilung: **06.09.2017**
(21) Anmeldenummer: 11824283.3
(22) Anmeldetag: 16.12.2011
(51) Int. Cl.: F24J 2/52, F16B 11/00

(54) **SOLARKOLLEKTORMODUL MIT BEFESTIGUNGSSYSTEM ZUM BEFESTIGEN EINES SPIEGELELEMENTS AN EINEM TRAGGERÜST**
SOLAR COLLECTOR MODULE WITH A FIXING SYSTEM FOR FIXING A MIRROR ELEMENT TO A SUPPORT FRAME
MODULE DE COLLECTEURS SOLAIRES AVEC UN SYSTÈME DE FIXATION POUR FIXER UN ÉLÉMENT MIROIR SUR UNE STRUCTURE DE SUPPORT

(30) Priorität: 17.12.2010 DE 102010054980
(43) Veröffentlichungstag der Anmeldung: 23.10.2013
(73) Patentinhaber: Flabeg Holding GmbH, 93437 Furth im Wald (DE)
(72) Erfinder: RAUCHER, Christoph, 56203 Höhr-Grenzhausen (DE); NAVA, Paul, 53844 Troisdorf (DE); WOHLFAHRT, Andreas, 59348 Lüdinghausen (DE); KUHLMANN, Gerd, 44143 Dortmund (DE); HÖGERL, Klaus, 93437 Furth im Wald (DE)
(74) Vertreter: Walkenhorst, Andreas
(86) Internationale Anmeldenummer: PCT/EP2011/006384
(87) Internationale Veröffentlichungsnummer: WO 2012/079771

(56) Entgegenhaltungen:
- WO-A1-2009/106103
- DE-A1- 4 416 884
- DE-A1- 19 929 480
- FR-A1- 2 629 149

## Beschreibung

Die Erfindung bezieht sich auf ein Sonnenkollektormodul mit einer Mehrzahl von Spiegelelementen und mit einem Traggerüst, wobei die Spiegelelemente am Traggerüst über eine Anzahl von Befestigungssysteme befestigt sind. Sie betrifft weiterhin ein Verfahren zur Herstellung eines solches Sonnenkollektormoduls. Im Rahmen von sogenannten Parabolrinnenkraftwerken kommen Sonnenkollektormodule mit jeweils einer Mehrzahl von Spiegelelementen zum Einsatz, die in ihrer Gesamtheit zur Bildung eines Parabelspiegels auf einem gemeinsamen Traggerüst angeordnet sind. Die Sonnenkollektormodule sind dabei üblicherweise in Nord- Süd- Richtung ausgerichtet und folgen einachsig der Sonne, wobei die Spiegelelemente aufgrund ihrer Anordnung zur Bildung eines Parabolspiegels die einfallende Sonnenstrahlung auf ein in der Brennlinie verlaufendes Absorberrohr bündeln. Im in der Brennlinie verlaufenden Absorberrohr können somit Temperaturen von bis zu 550 C° erreicht werden. Die dabei in das Absorberrohr eingebrachte Wärme kann über ein Arbeitsmedium abgeführt und über angeschlossene Wärmetauscher beispielsweise in Heißdampf gewandelt werden, der unter Einsatz üblicher Kraftwerkstechnologie angekoppelte Generatoren antreibt. Auf diese Weise bilden derartige Parabolrinnenkraftwerke Solarkraftwerke zur zentralen Stromerzeugung, wobei je nach Auslegung und Positionierung der Anlage Leistungsbereiche von beispielsweise zwischen 10 und 100 MW oder mehr erreichbar sind. Durch Hintereinanderschaltung einer Mehrzahl von Sonnenkollektormodulen der genannten Art können dabei Kollektoren einer Gesamtlänge von beispielsweise bis zu 150 m entstehen.

Für die ordnungsgemäße Funktionsweise und einen hohen Wirkungsgrad eines derartigen Parabolrinnenkraftwerks ist eine hochgenaue Ausrichtung der zur Bildung des Parabolspiegels vorgesehenen Spiegelelemente an ihrem Traggerüst von besonderer Bedeutung. Insbesondere ist dabei zur zuverlässigen Bündelung der einfallenden Sonnenstrahlen auf das in der Brennlinie verlaufende Absorberrohr eine genaue Justierung einzelner Spiegelelemente im Hinblick auf die als "Ideallinie" vorgegebene parabelartige Querschnittsform des Solarrinnenkollektors besonders wichtig. Es besteht daher das generelle Bestreben, bei der Herstellung und/oder der Montage der zur Verwendung in einem derartigen Parabolrinnenkraftwerk vorgesehenen Sonnenkolektormodule eine hochgenaue Ausrichtung der Spiegelelemente bei ihrer Befestigung am Traggerüst zu gewährleisten.

Zu diesem Zweck ist es grundsätzlich denkbar, die Montage der Spiegelelemente an ihren Traggerüsten unmittelbar vor Ort, das heißt direkt am eigentlich vorgesehenen Einsatzort, vorzunehmen und dabei unmittelbar durch geeignete Einstellhilfen wie beispielsweise Schraubverbindungen oder dergleichen die Feinjustierung vorzunehmen. Gerade im Hinblick auf die bei der Errichtung eines Parabolrinnenkraftwerks der genannten Art üblicherweise vorgesehene große Anzahl einzelner Sonnenkollektormodule und der sie bildenden Spiegelelemente und auch im Hinblick auf die vergleichsweise große flächige Ausdehnung des Kraftwerks insgesamt kann eine derartige Vorort-Montage einschließlich der Feinausrichtung der jeweiligen Komponenten jedoch mit erheblichen Aufwand verbunden sein.

Aus Vereinfachungsgründen kann es daher wünschenswert sein, bei der Auslegung der Sonnenkollektormodule für ein derartiges Parabolrinnenkraftwerk von vornherein eine zentralisierte Vormontage der einzelnen Sonnenkollektormodule vorzusehen, so dass eine spätere Installation am Einsatzort mit vergleichsweise geringem Aufwand und ohne zusätzliche Justierungs- und Ausrichtungsarbeiten erfolgen kann. Um dabei sicherzustellen, dass die bereits während der Vormontage vorgenommene hochgenaue Justierung und Ausrichtung der einzelnen Spiegelelemente auch nach dem Verbringen an den eigentlichen Einsatzort unverändert und zuverlässig erhalten bleibt, sollte die Befestigung der Spiegelelemente am Traggerüst weitgehend spannungsfrei und dennoch hochgenau und auch hinreichend dauerhaft und stabil erfolgen. Diese Kriterien sind, wie sich zwischenzeitlich herausgestellt hat, bei der Verwendung von herkömmlichen Schraubverbindungen zur Befestigung der Spiegelelemente an den Traggerüsten nicht in zufriedenstellender Weise erfüllbar.

Um hier Abhilfe zu schaffen, ist aus der WO 2009/106103 A1 ein auch bei der Befestigung von Spiegelelementen eines Solarkollektormoduls an ihrem Traggerüst verwendbares Fügeverfahren bekannt, bei dem die Verbindung der Komponenten miteinander unter Rückgriff auf eine Klebetechnik erfolgen kann. Bei dem diesbezüglich vorgesehenen Verfahren wird ein zur Aufnahme des Klebstoffs vorgesehenes Behältnis an einem der zu fügenden Bauteile befestigt und das andere zu fügende Bauteil mit einer korrespondierenden Fügefläche in den Innenraum dieses Behältnisses verbracht. Anschließend wird das Behältnis mit Klebstoff gefüllt und dieser ausgehärtet.

Der Erfindung liegt nunmehr die Aufgabe zugrunde, ein Sonnenkollektormodul mit einer Mehrzahl von Spiegelelementen und mit einem Traggerüst anzugeben, wobei die Spiegelelemente am Traggerüst über eine Anzahl von Befestigungssystemen befestigt sind, die gerade im Hinblick auf die genannten Kriterien für den Einsatz bei der Befestigung von Spiegelelementen eines Sonnenkollektormoduls der genannten Art an ihrem Traggerüst besonders geeignet sind und zudem eine im Vergleich zum genannten Fügeverfahren erleichterte Handhabung bei der Montage der Komponenten erlauben. Zudem soll ein besonders geeignetes Verfahren zur Herstellung eines solches Kollektormoduls angegeben werden. Bezüglich des Befestigungssystems wird diese Aufgabe erfindungsgemäß gelöst mit einer zur Anbringung an einem der Spiegelelemente vorgesehenen Sockelplatte, und mit einem zur Anbringung am Traggerüst vorgesehenen, einem Aufnahmekanal für einen Verindungskörper bildenden Mantelteil, das gemeinsam mit der Sockelplatte einen Aufnahmebehälter für flüssigen Klebstoff bildet.

Die Erfindung geht dabei von der Überlegung aus, dass für eine spannungsfreie, hochgenaue Ausrichtung und Justierung bei der Anbringung des Spiegelelements am Traggerüst des Sonnenkollektormoduls unter bewusster Abkehr von eigentlich vorgesehenen Schraubverbindungen oder dergleichen gezielt auf ein Klebeverfahren zurückgegriffen werden sollte. Unter Rückgriff auf zunächst flüssigen Klebstoff, der nach einer Justierung und Positionierung des Spiegelelements und des Traggerüsts zueinander in einen geeigneten Aufnahmebehälter eingebracht wird und dort zu einem Verbindungskörper aushärtet, ist es möglich, dem Verbindungskörper bedarfsgerecht eine äußere Form zu geben, die die Ist-Positionierung des Spiegelelements und des Traggerüsts zueinander aufnimmt und erhält. Das Befestigungssystem sollte daher dafür ausgelegt sein, einen Aufnahmebehälter für den flüssigen Klebstoff bereitzustellen, der erst nach der endgültigen Justierung und Positionierung des Spiegelelements und des Traggerüsts zueinander und gerade infolge dieser Feinausrichtung seine endgültige Form und Geometrie erhält, so dass der aushärtende Klebstoff genau diese räumliche Form aufnehmen und fixieren kann. Dazu ist vorgesehen, dass der Aufnahmebehälter durch mehrere Komponenten gebildet wird, von denen zumindest eine an dem Spiegelelement und eine an dem Traggerüst fixiert wird, bevor die Feinausrichtung und Positionierung des Spiegelelements und des Traggerüsts zueinander erfolgt.

Vorteilhafterweise ist die Sockelplatte dabei mit einem aufragenden Fixierdorn versehen, wobei das Mantelteil erst bei in den Aufnahmekanal eingebrachtem Fixierdorn den Aufnahmebehälter bildet. Hierdurch ist nämlich ermöglicht, dass beim Zusammenbringen der entsprechenden Elemente des Befestigungssystems, also insbesondere beim Einbringen des mit dem Spiegelelement verbundenen Fixierdorns in den korrespondierenden Aufnahmekanal des am Traggerüst angeordneten Mantelteils, spannungsfrei und im Wesentlichen ohne die Einbringung externer Kräfte eine hochgenaue Feinausrichtung der Komponenten relativ zueinander erfolgen kann,
da sich der Fixierdorn innerhalb des Aufnahmekanals des Mantelteils innerhalb gewisser Grenzen in sämtlichen Raumrichtungen (x,y und z-Richtung) frei und ungehindert bewegen kann und auch Verdrehungen um die x-, y- und/oder z-Achse möglich sind (so genannter sechs-achsiger Ausgleich). Auch bei in den Aufnahmekanal eingebrachtem Fixierdorn kann somit die Feinausrichtung der Komponenten, also des jeweiligen Spiegelelementes relativ zum Traggerüst, vollständig ohne die Einleitung von Kräften in das Befestigungssystem erfolgen, wobei der Fixierdorn innerhalb des Aufnahmekanals eine entsprechend angepasste Position einnimmt.

Um dabei eine besonders erleichterte Handhabung des Gesamtsystems zu ermöglichen, sollte zudem auch das abschließende, also bei in den Aufnahmekanal eingebrachtem Fixierdorn, vorgesehene Einfüllen des Klebstoffs auf besonders einfache Weise und insbesondere ohne Behinderung durch den Fixierdorn möglich sein. Um dies zu gewährleisten, sollte das Befestigungssystem das Einfüllen des Aufnahmekanals mit dem darin eingebrachten Fixierdorn von der vom Fixierdorn abgewandten Seite, also "von der Rückseite", her ermöglichen. Dies ist erreichbar, in dem der Aufnahmebehälter für den Klebstoff erst nach dem Zusammenbringen des Spiegelelements und des Traggerüsts miteinander, also durch den Endbereich des den Aufnahmekanal bildenden Mantelteils einerseits in Kombination mit der den Fixierdorn tragenden Sockelplatte andererseits, gebildet wird. Dabei ist somit vorgesehen, dass bei der Montage des Systems zunächst die Einzelelemente, also Mantelteil einerseits und Sockelplatte mit Fixierdorn andererseits, jeweils separat voneinander an den zu fügenden Bauteilen, also Traggerüst bzw. Spiegelelement, angebracht und erst danach zur Bildung des Aufnahmebehälters zusammengesetzt werden.

Zudem ist durch diese Anordnung der Komponenten auch eine besonders hohe mechanische Festigkeit und Steifigkeit des montierten Systems erreichbar. Da nämlich der Fixierdorn ohnehin mechanisch fest mit der ihn tragenden Sockelplatte verbunden ist, erfolgt die Kraftübertragung zwischen den Komponenten über die Bestandteile Sockelplatte/Fixierdorn einerseits und Mantelteil andererseits. Massgeblich für die Steifigkeit des Systems gegenüber Quer- oder Scherkräften ist daher nicht lediglich der - vergleichsweise geringe - Querschnitt des Fixierdorns, sondern der vergleichsweise deutlich größere Querschnitt des Mantelteils. Zudem kann bei der Befüllung des durch das Zusammenwirken von Sockelplatte und Mantelteil gebildeten Aufnahmebehälters der Klebstoff in einer ausreichend groß bemessenen Menge derart eingefüllt werden, dass er den in den Aufnahmekanal im Mantelteil hineinragenden Fixierdorn vollständig umschließt. Damit ist sichergestellt, dass an keiner Stelle des kraft- und momentenübertragenden Systems eine Weiterleitung von Kräften oder Momenten ausschließlich über den - im Querschnitt vergleichsweise dünn gehaltenen - Fixierdorn erfolgt.

Als Klebstoff ist in besonders vorteilhafter Ausgestaltung ein Polyurethanklebstoff, besonders bevorzugt ein Zweikomponenten-Polyurethanklebstoff, vorgesehen.

Für eine besonders zuverlässige und dauerhafte Montage und Befestigung des Spiegelelements am Traggerüst, sollte das Befestigungssystem - insbesondere nach Aushärten des in den durch den Mantelteil und die Sockelplatte gebildeten Aufnahmebehälter gefüllten Klebstoffs - auch für eine vergleichsweise hohe Zugbelastung geeignet ausgestaltet sein. Um dies zu ermöglichen, ist das Befestigungssystem vorteilhafterweise zusätzlich zur eigentlich vorgesehenen, durch den Klebstoff erzeugten stoffschlüssigen Verbindung der Komponenten miteinander auch für eine formschlüssige Verbindung der Komponenten miteinander, insbesondere durch entsprechende Hinterschneidungen, ausgestaltet. Gerade nach dem Aushärten des Klebstoffs und der dadurch bedingten Bildung eines festen Körpers im Aufnahmebehälter im Bereich des Fixierdorns einerseits und des ihn umgebenden Mantelteils andererseits ist dies auf besonders vorteilhafterweise erreichbar durch geeignete Konturierungen des Fixierdorns einerseits und/oder der ihn umgebenen Innenoberfläche des Mantelteils andererseits.

Zur Bildung derartiger Hinterschneidungen ist der Fixierdorn dazu vorteilhafterweise mit einer entsprechend geeigneten Oberflächenkonturierung versehen. Diese kann beispielsweise - bei der Bildung des Fixierdorns durch eine durch die Sockelplatte geführte Montageschraube - durch ein Schraubgewinde oder auch gegebenenfalls zusätzlich durch weitere Konturierungen gegeben sein. In alternativer oder zusätzlicher vorteilhafter Ausgestaltung kann die Innenoberfläche des Mantelteils entsprechende Durchbrüche, umlaufende Nuten oder dergleichen zur Bildung einer geeigneten Konturierung aufweisen. Auch durch die vorzugsweise vorgesehene Feuerverzinkung der Innenoberfläche des Mantelteils wird eine vergleichsweise feine Oberflächenkonturierung in Form erhöhter Oberflächenrauigkeit bereitgestellt. In alternativer oder zusätzlicher vorteilhafter Ausgestaltung kann das Mantelteil in seinem Endbereich darüber hinaus auch mit einer geeignet eingebrachten Querschnittsverengung des Aufnahmekanals zur Bildung einer Hinterschneidung der genannten Art versehen sein, beispielsweise in Form einer nach innen weisenden Bördelung im Öffnungsbereich.

In einer alternativen Ausführungsform kann das Befestigungssystem auch unter Verzicht auf den Fixierdorn oder unter Ergänzung des Fixierdorns in funktionaler Hinsicht derart ausgeführt sein, dass die mechanischen Anforderungen an die Verbindung, insbesondere die Stabilität gegenüber Querkräften und/oder Zug- oder Druckbelastung in Längsrichtung des Aufnahmekanals gesehen über den durch den ausgehärteten Klebstoff gebildeten Verbidungskörper an sich erfolgt. Dazu ist der durch den Mantelteil in Verbindung mit der Sockelplatte gebildete Aufnahmebehälter für den flüssigen Klebstoff hinsichtlich seiner Formgebung vorteilhafteweise derart gestaltet, dass der durch Aushärten des Klebstoffs entstehende Verbindungskörper sowohl gegenüber Querkräften als auch gegenüber Zugspannungen in Längsrichtung formschlüssig mit den den Aufnahmebehälter bildenden Bauteilen verbunden ist. Dazu sind diese vorteilhafterweise derart gestaltet, dass sich geeignete Hinterschneidungen bilden.

Bezüglich des Mantelteils, ist dies erreichbar, indem der im Mantelteil vorgesehene Aufnahmekanal vorteilhafterweise einen Hinterschneidungsbereich mit im Vergleich zum der Sockelplatte zugewandten Mündungsbereich vergrößerten Innenquerschnitt aufweist. Vom "freien" oder offenen Ende des Aufnahmekanals gesehen weist dieser somit zunächst einen vergleichsweise kleineren freien Öffnungsquerschnitt auf, der sich in Längsrichtung des Aufnahmekanals gesehen im weiter innen liegenden Hinterschneidungsbereich aufweitet. In zusätzlicher oder alternativer vorteilhafter Ausgestaltung ist die Sockelplatte zudem im Kontaktbereich zur Mündung des Aufnahmekanals mit einer Durchtrittsöffnung versehen, durch die der flüssige Klebstoff beim Befüllen der Aufnahmekammer hindurchtreten kann. Auf der rückwärtigen Seite ist die Sockelplatte dabei vorzugsweise mit einer Bodenwanne versehen, die auf der vom Mantelteil abgewandten Seite der Sockelplatte eine Auffangkammer für den durch die Durchtrittsöffnung hindurchtretenden Klebstoff bildet.

Gerade durch die Kombination dieser Massnahmen entsteht beim Aushärten des eingefüllten Klebstoffs ein Verbindungskörper mit beidseitiger Stempelform, der demzufolge sowohl mit dem Mantelkörper als auch mit der Sockelplatte formschlüssig verbunden ist.

Aufgrund der Ausgestaltung des Befestigungssystem mit dem Fixierdorn oder Verbindungskörper einerseits und dem diesen umgebenen Mantelteil andererseits ist aufgrund der innerhalb des Aufnahmekanals im Mantelteil freien Beweglichkeit des Fixierdorns eine spannungs- und kräftefreie Feinausrichtung der Systemteile relativ zueinander in der Querschnittsebene des Aufnahmekanals durch die entsprechende Bewegungsmöglichkeit der relevanten Bauteile innerhalb dieser Ebene problemlos möglich. Um zudem auf besonders einfache Weise auch eine die endgültige Justierung erleichternde, in gewissen Grenzen freie Bewegungsmöglichkeit der Bauteile zueinander, insbesondere des Fixierdorns innerhalb des Aufnahmekanals, in Längsrichtung des Aufnahmekanals gesehen zu ermöglichen und dennoch in zuverlässiger Weise die Bildung des Aufnahmebehälters für den flüssigen Klebstoff durch den Mantelteil und die Sockelplatte zu ermöglichen, ist im Bereich zwischen der Endmündung des Aufnahmekanals und der Sockelplatte ein geeignetes flexibles und elastisches Dichtungs- oder Pufferelement vorgesehen. Dieses ist aus einem im Vergleich zum Material der Sockelplatte und/oder des Mantelteils elastischen Material wie beispielsweise Schaumstoff gefertigt, so dass bei einer Feinausrichtung der Komponenten zueinander, also bei einer Relativbewegung des Fixierdorns und der tragenden Sockelplatte, relativ zum Aufnahmekanal in dessen Längsrichtung gesehen ein mehr oder weniger starkes Zusammendrücken des Dichtungs- oder Pufferelements erfolgt, wobei dieses unabhängig von seiner jeweiligen Verformung eine ausreichende Dichtigkeit des von Sockelplatte und Mantelteil gebildeten Aufnahmebehälters für die Befüllung mit flüssigem Klebstoff sicherstellt.

In besonders vorteilhafter Ausgestaltung ist das Pufferelement dabei mehrkomponentig ausgeführt, wobei die jeweiligen Komponenten gezielt für eine spezifizsche Funktionalität ausgelegt sind. Insbesondere ist dabei vorteilhafterweise eine erste der Komponenten gezielt für die zumindest vorübergehende Abdichtung des von Sockelplatte und Mantelteil gebildeten Aufnahmebehälters für die Befüllung mit flüssigem Klebstoff ausgelegt und weist dementsprechend in der Art einer Abdichtbarriere eine vergleichsweise hohe Dichtigkeit gegenüber dem Klebstoff auf. Eine zweite der Komponenten ist hingegen vorzugsweise gezielt für die Aufnahme der genannten Verformung und dementsprechend für eine vergleichsweise hohe Verformbarkeit und dementsprechend erhöhte Elastizität ausgelegt. Vorteilhafterweise weist somit die erste Komponente des Pufferelements im Vergleich zur zweiten Komponente eine geringere Elastizität oder Verformbarkeit und eine höhere Dichte auf. Bei einer Ausführung des Pufferelements auf Schaumstoffbasis kann dies insbesondere dadurch erreicht sein, dass die erste Komponente in der Art einer Abdichtbarriere geschlossenporig ausgeführt ist, wohingegen die zweite Komponente offen- oder gemischtporig ausgeführt ist. Vorzugsweise sind die Komponenten dabei stoffschlüssig miteinander verbunden, beispielsweise miteinander verklebt oder verschweißt.

In alternativer oder zusätzlicher vorteilhafter Ausgestaltung ist das Pufferelement hinsichtlich seiner Raumform in der Art einer Glocke oder Stulpe ausgestaltet. Bei einer derartigen Formgebung werden die Anforderungen, insbesondere bezüglich der Verformbarkeit, hinsichtlich Abdichtung, Ausgleich der Toleranzen, vergleichsweise gering gehaltenen Restkräften und dergleichen, in erster Linie über die Geometrie des Pufferelements und ggf. zusätzlich noch über dessen Materialwahl erfüllt. Die Formgebung als Glocke oder Stulpe bedingt dabei insbesondere, dass das Pufferelement in der Art eines Kanals mit sich in Längsrichtung aufweitendem Querschnitt ausgeführt ist. Bei geeignet flexiblem Material kann dabei infolge der Formgebung die Aufnahme von Längs- und auch Querkräften über eine geeignete Verformung der Kanalwand sichergestellt werden, ohne dass dies in zu großen Rückstellkräften in den Endbereichen des Pufferelements resultieren würde.

Das Befestigungssystem ist grundsätzlich dafür ausgelegt, dass nach dem Befüllen des durch die Sockelplatte und den Mantelteil gebildeten Aufnahmebehälters mit flüssigem Klebstoff dieser aushärtet und damit eine dauerhafte und an sich unlösbare Verbindung der Sockelplatte und des Mantelteils miteinander bildet. Um dennoch im Bedarfsfall, beispielsweise bei einer Beschädigung des Spiegelelements innerhalb des Parabolrinnenkraftwerks oder dergleichen, einen Austausch einzelner Elemente zu ermöglichen, ist das Befestigungssystem vorteilhafterweise - über die eigentlich vorgesehene Verbindung der Bauteile miteinander hinaus - zur Bereitstellung einer zusätzlichen, lösbaren Verbindung ausgelegt. Dazu umfasst die Sockelplatte vorteilhafterweise zusätzlich zu einer ersten, zur Verbindung mit dem Mantelteil vorgesehenen Kontaktplatte zur Anbringung an dem jeweiligen Bauteil eine weitere Kontaktplatte. Diese weitere, seitlich zur ersten Kontaktplatte angeordnete Kontaktplatte kann beispielsweise über eine Schraubverbindung oder dergleichen mit dem eigentlichen Bauteil, also dem Spiegelelement, verbunden sein. Bei der Montage des Spiegelelements kann sodann diese Schraubverbindung zunächst angebracht werden, so dass das Spiegelelement mit der weiteren Kontaktplatte und damit mit der Sockelplatte verbunden ist. Anschließend kann auf die bereits beschriebene Weise die Anbringung des Spiegelelements am Traggerüst unter Benutzung der vorgesehenen Klebverbindung erfolgen. Im Bedarfsfall kann dann später die seitlich zur eigentlichen Klebverbindung gelegene Schraubverbindung des Spiegelelements mit der weiteren Kontaktplatte gelöst und das Spiegelelement gegebenenfalls ausgetauscht werden.

Um in einem derartigen System die Zugänglichkeit der Schraubverbindung mit dem Spiegelelement und auch den späteren Austausch von Spiegelelementen auf die genannte Art besonders zu erleichtern, ist vorteilhafterweise die weitere Kontaktplatte abgewinkelt an der ersten Kontaktplatte angebracht. Zudem weist die weitere Kontaktplatte vorteilhafterweise einen Montageanschlag auf, der mit einem entsprechenden Montageanschlag am Spiegelelement in Kontakt gebracht werden kann, so dass in der Art einer Referenz eine besonders einfache Justierung beim Anbringen des Spiegelelements der Kontaktplatte ermöglicht ist.

Die Komponenten des Befestigungssystems, insbesondere der Fixierdorn, die Sockelplatte und das Mantelteil, können aus im Wesentlichen gleichem Material, beispielsweise feuerverzinktem Stahl oder anderem Metall, bestehen. Vorteilhafterweise ist aber der Fixierdorn als ein im Vergleich zum Mantelteil biegeweicheres oder flexibleres Element, insbesondere ein mehrfaseriges Element, vorzugsweise aus im Vergleich zum Mantelteil elastischerem Material, ausgeführt. Durch diese, durch geeignete Dimensionierung und/oder Materialwahl erzeugte, erhöhte Flexibilität oder Elastizität des Fixierdorns im Vergleich zum Mantelteil ist sichergestellt, dass im Falle einer Kollision beider Elemente, beispielsweise während der Montage, der Fixierdorn in der Art eines voreingestellten Ausweichens nachgibt und sich geeignet verformt. Bei einer Kollision der Komponenten während der Montage ist somit eine Beschädigung der vergleichsweise empfindlichen Spiegelelemente sicher vermieden. Das Befestigungssystem wird zur Befestigung von Spiegelelementen an einem Traggerüst zur Bildung eines Sonnenkollektormoduls verwendet.

Bezüglich des Verfahrens wird die genannte Aufgabe gelöst, indem zunächst einerseits die Sockelplatte am Spiegelelement und andererseits das Mantelteil am Traggerüst angebracht werden, wobei anschließend eine Justierung von Spiegelelement und Traggerüst relativ zueinander derart vorgenommen wird, dass das Mantelteil gemeinsam mit der Sockelplatte einen Aufnahmebehälter für den flüssigen Klebstoff bildet, der sodann mit dem flüssigen Klebstoff befüllt wird.

Die mit der Erfindung erzielten Vorteile bestehen insbesondere darin, dass durch die Ausgestaltung der Komponenten des Befestigungssystems, insbesondere durch das Zusammenwirken von Mantelteil einerseits und Sockelplatte andererseits zur Bereitstellung eines Aufnahmebehälters für den flüssigen Klebstoff, die Benutzung der Klebetechnik als Fügetechnik bei der Befestigung von Spiegelelementen an ihrem Traggerüst zur Bildung eines Sonnenkollektormoduls besonders vereinfacht wird. Gerade durch diese Ausgestaltung der Komponenten ist nämlich nach der Bildung des Aufnahmebehälters für den flüssigen Klebstoff, also nachdem der Mantelteil stirnseitig geeignet in Kontakt mit der Sockelplatte gebracht wurde, ein durch den gegebenenfalls vorgesehenen Fixierdorn oder andere Komponenten unbehindertes Befüllen des Aufnahmebehälters mit dem flüssigen Klebstoff von seiner Rückseite her ermöglicht, so dass die endgültige Befestigung des Spiegelelements am Traggerüst auf besonders einfache Weise und mit hoher Verarbeitungsgeschwindigkeit und damit geeignet für besonders hohe Stückzahlen erfolgen kann. Damit ist die Klebetechnik auf einfache Weise auch im großen Umfang einsetzbar, so dass deren Vorteile beim Ausrichten und Feinjustieren der Spiegelelemente auf dem Traggerüst, also insbesondere an eine spannungs- und kräftefreie Befestigung, in großen Umfang genutzt werden können.

Zudem kann bei der Befüllung des durch das Zusammenwirken von Sockelplatte und Mantelteil gebildeten Aufnahmebehälters der Klebstoff in einer ausreichend groß bemessenen Menge derart eingefüllt werden, dass er nach seiner Aushärtung einen den mechanischen Belastungen gewachsenen, ausreichend groß dimensionierten Verbindungskörper bilden kann und/oder gegebenenfalls den in den Aufnahmekanal im Mantelteil hineinragenden Fixierdorn vollständig umschließt. Damit ist sichergestellt, dass an keiner Stelle des kraft- und momentenübertragenden Systems eine Weiterleitung von Kräften oder Momenten ausschließlich über den - im Querschnitt vergleichsweise dünn gehaltenen - Fixierdorn erfolgt, so dass das System insgesamt eine besonders hohe Steifigkeit und Festigkeit gegenüber Querkräften aufweist. Unter anderem ist hierdurch auch eine erhöhte Festigkeit gegenüber Verziehen des Materials bei Feuerverzinkung oder Transportbeschädigung erreichbar. Zudem ist der gegebenenfalls vorgesehene Fixierdorn nach der Montage infolge der vollständigen Umhüllung mit Klebstoff durch diesen besonders weitgehend vor Korrosion geschützt.

Durch diese erhöhte Steifigkeit können die Mantelteile oder Hüllrohre nunmehr für eine vertikale Einbaulage beim Montageprozess ausgelegt sein, so dass dieser (durch vertikales Absenken des Traggerüsts auf das Spiegelelement) besonders einfach gehalten werden kann. Eine Ausrichtung der Fixierdorne senkrecht zur Spiegeloberfläche infolge zu geringer Steifigkeit der Systemkomponenten ist nunmehr nicht mehr erforderlich. Durch die Ausführung des Mantelteils als Hohlprofil (d. h. unter Ausbildung des Aufnahmekanals) kann die Kraftflusslinie des Mantelteils zudem nunmehr in der Ebene des als Fachwerk ausgeführten Traggerüsts angeordnet werden, so dass die auftretenden Kräfte ohne zusätzliches Biegemoment quer zur Fachwerksebene in diese eingeleitet werden können. Das Tragwerk oder Traggerüst kann dann vergleichsweise dünner und somit besonders materialsparend ausgeführt werden.

Ein Ausführungsbeispiel der Erfindung wird anhand einer Zeichnung näher erläutert. Darin zeigen:
FIG. 1. ein Sonnenkollektormodul,
FIG. 2 das Sonnenkollektormodul nach FIG. 1 im Querschnitt,
FIG. 3 ein Befestigungssystem,
FIG. 4 das Befestigungssystem nach FIG. 3 im Querschnitt,
FIG. 5 ein alternatives Befestigungssystem nicht Teil der vorliegenden Anmeldung,
FIG. 6 das Befestigungssystem nach FIG.5 im Querschnitt, und
FIG. 7 das Befestigungssystem nach FIG.4 mit alternativem Pufferelement im Querschnitt, und
FIG. 8 ein alternatives Befestigungssystem im Querschnitt.

Gleiche Teile sind in allen Figuren mit denselben Bezugszeichen versehen.

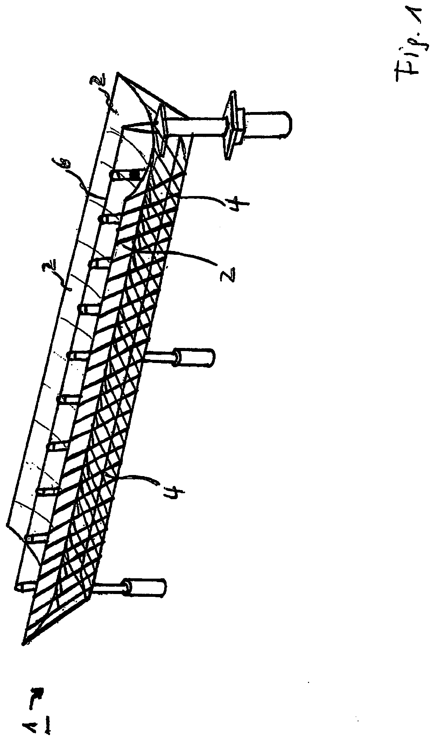

Das Sonnenkollektormodul 1 gemäß FIG. 1 ist zum Einsatz in einem sogenannten Parabolrinnenkraftwerk vorgesehen. Es umfasst eine Mehrzahl von Spiegelelementen 2, die in ihrer Gesamtheit einen Parabolspiegel bilden und dazu auf einem Traggerüst 4 angeordnet sind. Das Sonnenkollektormodul 1 ist dabei für eine Installation mit seiner Längsachse in Nord-Südrichtung ausgelegt, wobei das Traggerüst 4 derart schwenkbar gelagert ist, dass der durch die Spiegelelemente 2 gebildete Parabolspiegel einachsig der Sonne folgen kann. Der durch die Spiegelelemente 2 gebildete Parabolspiegel bündelt dabei die einfallende Sonnenstrahlung auf seine Brennlinie, in der ein Absorberrohr 6 angeordnet ist. Das Absorberrohr 6 wird durch ein geeignetes Wärmemedium durchströmt und ist in nicht näher dargestellter Weise mit nachfolgenden Kraftwerkskomponenten verbunden, in denen eine Umwandlung der über die Sonneneinstrahlung eingebrachten Wärme in andere Energieformen erfolgt.

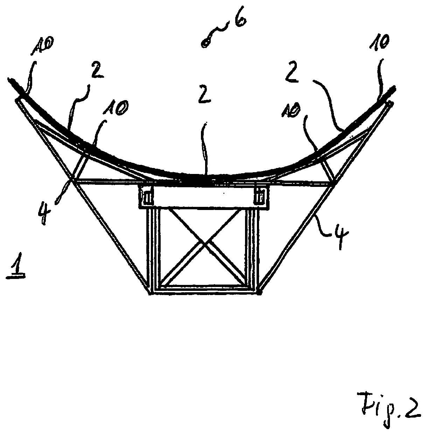

Für einen hohen Wirkungsgrad des Parabolrinnenkraftwerks ist eine hochgenaue und präzise Ausführung des Sonnenkollektormoduls 1, insbesondere im Hinblick auf die Anordnung der Spiegelelemente 2 auf ihrem Traggerüst 4, ein wichtiges Auslegungsziel. Wie in der Querschnittsdarstellung in FIG. 2 gezeigt, sind die Spiegelelemente 2 dabei an einzelnen Haltepunkten 10 am Traggerüst 4 derart befestigt, dass die durch sie gebildete Spiegelfläche im Querschnitt eine Parabel mit geeignet gewählter Brennlinie, nämlich den vorgesehenen Einbauort für das Absorberrohr 6, bildet. Um dabei eine hochgenaue Ausrichtung der Spiegelelemente 2 zur Einhaltung der vorgegebenen Parabellinie selbst bei einer Vormontage an einem zentralen Montageort unabhängig vom vorgesehenen Einsatzort zu gewährleisten, sind die Spiegelelemente 2 an den Haltepunkten 10 hochgenau und unter gezielter Vermeidung der Einleitung von Spannungen oder Kräften am Traggerüst 4 befestigt.

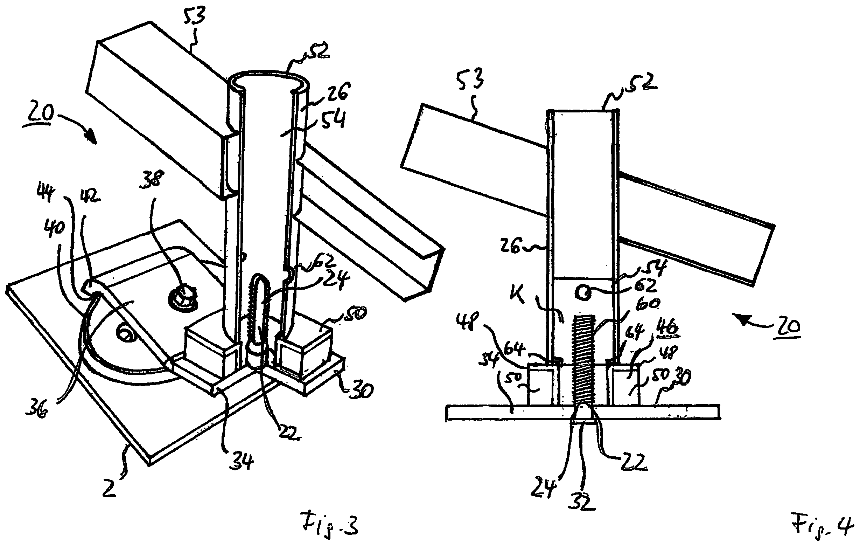

Um dies zu ermöglichen, ist an den Haltepunkten 10 jeweils ein geeignetes Befestigungssystem 20 vorgesehen, wie es in FIG. 3 in seitlicher Ansicht und in FIG. 4 im Querschnitt gezeigt ist. Das Befestigungssystem 20 ist dabei für die gewünschte spannungsfreie und kräftefreie Verbindung der Bauteile Spiegelelement 2 einerseits und Traggerüst 4 andererseits miteinander gezielt für die Nutzung einer Klebeverbindung ausgelegt. Dazu umfasst das Befestigungssystem 20 als wesentliche Verbindungselemente einerseits einen Fixierdorn 22, im Ausführungsbeispiel gebildet durch eine Schraube 24, und ein den Fixierdorn 22 umgebendes, einen Aufnahmekanal für den Fixierdorn 22 bildendes Mantelteil 26, im Ausführungsbeispiel gebildet durch ein Rohrstück.

Der Fixierdorn 22, im Ausführungsbeispiel in Form der Schraube 24, ist auf einer Sockelplatte 30 angeordnet. Wie der Querschnittszeichnung in FIG. 4 entnehmbar ist, ist dabei die den Fixierdorn 22 bildende Schraube 24 durch eine geeignete Bohrung durch die Sockelplatte 30 durchgeführt, wobei ihr Schraubenkopf 32 formschlüssig an der Sockelplatte 30 anliegt. In der Darstellung nach FIG. 3 ist ersichtlich, dass die Sockelplatte 30 eine zur Aufnahme der Fixierdorns 22 vorgesehene erste Kontaktplatte 34 aufweist, an die sich in abgewinkelter Anordnung eine weitere Kontaktplatte 36 anschließt. Im Bereich der weiteren Kontaktplatte 36 ist die Sockelplatte über eine Verbindungsschraube 38 mit einem Halteelement 40, das seinerseits am Spiegelelement 2 angeklebt ist, lösbar verbunden. Zur erleichterten Montage ist die weitere Kontaktplatte 36 in Form eines Falzes 42 mit einem Montageanschlag 44 versehen, der im montierten Zustand am Rand des Haltelements 40 anliegt.

Das im Ausführungsbeispiel in Form eines Rohrstücks vorliegende Mantelteil 26 ist seinerseits zur festen Anbringung am anderen Bauteil, also am Traggerüst 4, beispielsweise durch Anschweißen, vorgesehen. Zwischen der stirnseitigen Öffnung des Mantelteils 26 und der Sockelplatte 30 ist zudem ein Pufferelement 46 aus vergleichsweise weichem Material, im Ausführungsbeispiel aus Schaumstoff, angeordnet.

Bei der Montage des Sonnenkollektormoduls 1, also bei der Befestigung des jeweiligen Spiegelelements 2 am Tragegerüst 4, wird zunächst in der Art einer Vormontage die Sockelplatte 30 im Bereich ihrer zweiten Kontaktplatte 36 über die Verbindungsschraube 38 und das Halteelement 40 am Spiegelelement 2 befestigt. Das Mantelteil 26 ist dabei als fester Bestandteil des Traggerüsts 4, beispielsweise als Endstück eines Rohrelements des Traggerüsts 4, ausgeführt und vorzugsweise zentrisch im Profil innerhalb der jeweiligen Tragstruktur angeordnet. Sodann wird das Spiegelelement 2 geeignet relativ zum Traggerüst 4 positioniert, wobei im Bereich des Befestigungssystems 20 der durch die Schraube 24 gebildete Fixierdorn 22 in den Aufnahmekanal innerhalb des Mantelteils 26 eingeführt wird. Die Feinjustierung und hochgenaue Ausrichtung des Spiegelelements 2 in Relation zum Traggerüst 4 kann dabei bei bereits in den Aufnahmekanal eingebrachtem Fixierdorn 22 erfolgen, da sich der Fixierdorn 22 in dieser Phase frei innerhalb des Aufnahmekanals des Mantelteils 26 bewegen kann. In bezüglich der Sockelplatte 30 gesehen seitlicher oder lateraler Richtung kann in der Art einer X-Y-Positionierung somit eine hochgenaue Festlegung der Position des Fixierdorns 22 innerhalb des Aufnahmekanals erfolgen. In Längsrichtung des Fixierdorns 22 gesehen, also "in Z-Richtung" kann ebenso eine Relativbewegung von Sockelplatte 30 und Mantelteil 26 zum Zweck einer hochgenauen Ausrichtung auch in diese Richtung erfolgen.

Das Pufferelement 46 wird dabei aufgrund seiner Elastizität mehr oder weniger komprimiert, stellt aber dennoch eine materialseitige Verbindung zwischen der stirnseitigen Öffnung des im Mantelteil 26 befindlichen Aufnahmekanals und der Sockelplatte 30 her. Das vorzugsweise als Schaumstoffelement, insbesondere aus geschlossenporigem Schaumstoff, ausgeführte Pufferelement 46 wird bei der Montage vorteilhafterweise in der Art einer Vormontage zunächst an der Sockelplatte 30 geeignet befestigt, beispielsweise durch Aufkleben und/oder mit Abziehfolie, bevor die Zusammenführung mit dem Mantelteil 26 erfolgt. Die Ausführung des Pufferelements 46 aus geschlossenporigem Schaumstoff stellt dabei insbesondere sicher, dass beim späteren Betrieb des Systems der dann ausgehärtete Klebstoff weitgehend vor Feuchtigkeit geschützt und damit besonders langlebig ist. Andererseits kann das Pufferelement 46 auch aus offenporigem Schaumstoff ausgeführt sein. Dadurch ist insbesondere gewährleistet, dass die bei der Kompression des Pufferelements während der Montage auftretenden Rückstellkräfte nicht zu groß werden und damit die Genauigkeit der Montage nicht zu sehr beeinträchtigen. Besonders bevorzugt ist das Pufferelement 46 dabei derart ausgelegt, dass es beiden Anforderungen, also sowohl einem Feuchtigkeitsschutz für den Klebstoff als auch vergleichsweise gering gehaltenen Rückstellkräften, genügt. Dazu ist das Pufferelement 46 aus einer geeignet gewählten Kombination offen- und geschlossenporiger Anteile gebildet, wobei im Hinblick auf die spezifischen jeweiligen Anforderungen die Anteilsverhältnisse und/oder die Porengrössen geeignet gewählt sind.

Insbesondere ist das Pufferelement 46 somit mehrkomponentig ausgeführt, wobei eine erste Komponente 48 gezielt für die zumindest vorübergehende Abdichtung des von Sockelplatte 30 und Mantelteil 26 gebildeten Aufnahmebehälters für die Befüllung mit flüssigem Klebstoff ausgelegt ist. Die erste Komponente 48 weist dementsprechend in der Art einer Abdichtbarriere eine vergleichsweise hohe Dichtigkeit gegenüber dem Klebstoff auf und ist hinsichtlich ihrer räumlichen Positionierung entlang der gesamten nach inenn gewändeten Oberfläche des Pufferelements 46 geführt. Eine zweite Komponente 50 ist hingegen vorzugsweise gezielt für die Aufnahme der genannten Verformung und dementsprechend für eine vergleichsweise hohe Verformbarkeit und dementsprechend erhöhte Elastizität ausgelegt. Im Ausführungsbeispiel, bei dem das Pufferelement 46 auf Schaumstoffbasis ausgeführt ist, ist dazu die erste Komponente 48 geschlossenporig ausgeführt, wohingegen die zweite Komponente 50 vergleichsweise offen- oder gemischtporig ausgeführt ist. Die Komponenten 48,50 sind dabei stoffschlüssig miteinander verbunden, insbesondere miteinander verklebt oder verschweißt. Das aus den Komponenten 48,50 gebildete Pufferelement 46 kann alernativ aber auch mit einem hierfür geeigneten Verfahren hergestellt sein, beispielsweise durch Koexkusion. Selbst bei gleichem Basismaterial der Komponenten 48, 50 bedingt die vergleichsweise geschlossenporige Ausführung der ersten Komponente 48 für eine entsprechend höhere Dichtigkeit gegenüber dem Klebstoff, dass die erste Komponente 48 eine höhere Dichte aufweist als die zweite Komponente 50.

Die Anbindung an das Traggerüst 4 erfolgt dabei insbesondere durch Befestigung des rückseitigen Endes 52 des Mantelteils 26 an ein Trägerrohr 53, welches Teil des Traggerüsts 4 ist. Dabei wird das rückseitige Ende 52 vorzugsweise durch das Trägerrohr 53 durchgesteckt und in der Endposition geeignet fixiert, insbesondere verschweißt. Das rückseitige Ende 52 des Mantelteils 26 wird dabei vorzugsweise "senkrecht", also parallel zur Montagerichtung durch Absenkung, in die korrespondierende Aufnahmeöffnung im Trägerrohr 53 eingebracht, wobei sämtliche Rohrstücke (pro Spiegel) vorzugsweise parallel und gleichzeitig, d. h. insbesondere in einem gemeinsamen Arbeitsschritt, eingebracht werden.

Nachdem die genaue Ausrichtung von Spiegelelement 2 und Traggerüst 4 erfolgt ist, kann, wie dies insbesondere in der Querschnittsdarstellung nach FIG. 4 ersichtlich ist, der Aufnahmekanal des Mantelteils 26 von seinem rückseitigen Ende 52 her mit Klebstoff K befüllt werden. Nach der erfolgten genauen Justierung und Ausrichtung insbesondere unter Rückgriff auf das Pufferelement 46 bildet dabei das Mantelteil 26 gemeinsam mit der Sockelplatte 30 und insbesondere mit dem als Dichtungselement wirkenden Pufferelement 46 einen Aufnahmebehälter 54 für den flüssigen Klebstoff K. Dieser kann somit ungehindert und auf besonders einfache Weise in den Aufnahmebehälter 54 eingefüllt werden, ohne dass hierdurch Spannungen, Kräfte oder dergleichen in das System eingeleitet würden. Anschließend kann der eingefüllte Klebstoff K aushärten und bildet somit eine stoffschlüssige Verbindung zwischen dem Fixierdorn 22 und der Innenoberfläche des Mantelteils 26. Zudem ist vorzugsweise eine Befüllung des durch das Zusammenwirken von Sockelplatte 30 und Mantelteil 26 gebildeten Aufnahmebehälters 54 mit Klebstoff in einer ausreichend groß bemessenen Menge derart vorgesehen, dass der Klebstoff den in den Aufnahmekanal im Mantelteil 26 hineinragenden Fixierdorn 22 vollständig umschließt. Damit ist sichergestellt, dass an keiner Stelle des kraft- und momentenübertragenden Systems eine Weiterleitung von Kräften oder Momenten ausschließlich über den - im Querschnitt im Vergleich zum Mantelteil 26 dünn gehaltenen - Fixierdorn 22 erfolgt.

Die dadurch erreichbare erhöhte Stabilität gerade gegenüber Querkräften kann insbesondere im Hinblick auf die möglicherweise vergleichsweise großen Abstände der miteinander zu verbindenden Komponenten, insbesondere zum Traggerüst 4, von beispielsweise bis zu 250 mm besonders bedeutsam sein. Zudem ist der Fixierdorn 22, wie dies ebenfalls in Fig. 4 gut erkennbar ist, nach der Montage infolge der vollständigen Umhüllung mit Klebstoff durch diesen besonders weitgehend vor Korrosion geschützt. Andererseits bilden aber auch die Sockelplatte 30 und das Mantelteil 26 eine nahezu vollständige, allseitige Umhüllung des Klebstoffs. Dadurch ist dieser seinerseits vor Lichteinfall und Bestrahlung und damit insbesondere vor UV-Strahlung weitgehend geschützt. Damit ist gerade im Hinblick auf das vorgesehene Einsatzumfeld in Solarkraftwerken selbst bei Verwendung von nur begrenzt UV-beständigen Klebstoffen eine besonders haltbare und langlebige Klebeverbindung ermöglicht.

Diese Verbindung ist nach dem Aushärten des Klebstoffs K und gerade auch im Hinblick auf den mechanischen Kontakt zwischen Mantelteil 26 einerseits und Sockelplatte 30 andererseits somit vergleichsweise stabil gegenüber Druckbelastung und auch gegen Querkräfte. Um aber auch eine besonders hohe Stabilität gegenüber Zugbelastung zu gewährleisten, kann die durch den Klebstoffkörper und die ihn berührenden Verbindungsteile, nämlich den Fixierdorn 22 einerseits und die Innenoberfläche des Mantelteils 26 andererseits, gebildete stoffschlüssige Verbindung noch durch geeignete Formgebung der Komponenten, insbesondere zur Bildung von Hinterschneidungen oder dergleichen, geeignet ergänzt sein. Dazu weisen gegebenenfalls der Fixierdorn 22 und/oder das Mantelteil 26 an ihren entsprechenden, zur Verbindung mit dem Klebstoff vorgesehenen Oberflächenteilen geeignete Aufrauungen oder Konturierungen auf. Im Ausführungsbeispiel bildet das Schraubgewinde 60 der zur Bildung des Fixierdorns 22 vorgesehenen Schraube 24 eine derartige Oberflächenkonturierung. Aufgrund der durch das Schraubgewinde 60 gegebenen quer verlaufenden Oberflächenrillen wird nämlich eine derartige, für eine innige Verzahnung mit dem Klebstoffkörper geeignete Oberfläche bereitgestellt.

Alternativ oder zusätzlich können auch noch weitere derartige Oberflächenelemente zur Erhöhung der Zugbelastbarkeit vorgesehen sein, beispielsweise in Form von umlaufenden Nuten, Ausnehmungen oder dergleichen. Im Ausführungsbeispiel gezeigt sind Öffnungen 62 im Mantelteil 26, in die der Klebstoff vor dem Aushärten eindringen kann, so dass Hinterschneidungen entstehen. Des weiteren kann das Mantelteil 26 im Bereich seiner endseitigen Öffnung mit einer geeigneten Querschnittsverengung, beispielsweise einer innen verlaufenden Bördelung 64, versehen sein.

Das Mantelteil 26 kann ggf. unrund sein, um der Tatsache gerecht zu werden, dass die Anforderungen an Durchmesser, welche die gegebenen Toleranzen ausgleichen sollen, nicht "isotrop" sind. Insbesondere könnte konstruktionsbedingt im Trägersystem die Toleranz längs zur Parabolrinne größer sein (geringere Steifigkeit des Trägersystems). Ein solches "unrundes" Profil könnte also elliptisch, rechteckig usw. sein. Die Optimierung des Profils reduziert/begrenzt den Klebstoffverbrauch. Das Rohr könnte auch z.B. im Verbindungsbereich zum Träger rund sein (wg. Bohrungen) und im Verbindungsbereich zum Dorn in eine Ellipse oder ein annäherndes Rechteck übergehen.

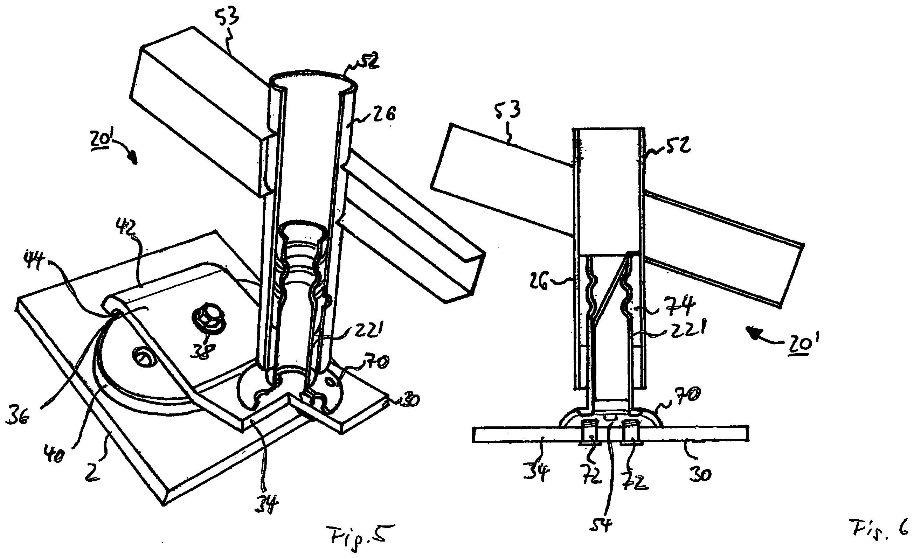

Grundsätzlich wird bei der Auslegung des Befestigungssystems 20 davon ausgegangen, dass in der Hauptsache ein (nur) dreiachsiger Ausgleich notwendig ist, der in einen "Z-Ausgleich" (Längsverschieben des Fixierdorns 22 gegenüber dem Mantelteil 26) einerseits und einen "X-Y-Ausgleich" oder eine Flächenfügung (Querverschieben des Fixierdorns 22 innerhalb des Mantelteils 26) andererseits aufgeteilt wird. Ein alternatives Ausführungsbeispiel nicht Teil de vorliegenden Anmeldung, für ein geeignetes, auf der Bildung einer Klebeverbindung beruhendes Befestigungssystem 20', das eine noch weitergehende Aufteilung dieser Ausgleichsanteile erlaubt, ist in FIG. 5 in seitlicher Ansicht und in FIG. 6 im Querschnitt gezeigt. Der zur Einbringung in den Aufnahmekanal im Mantelteil 26 vorgesehene Fixierdorn 22' ist hierbei seinerseits ebenfalls als Hohlteil ausgeführt und in seinem Kontakt- oder Fußbereich über einen Montageteller 70 an der Sockelplatte 30 befestigt. In an der Sockelplatte 30 angeordnetem Zustand bildet dieser gemeinsam mit der Sockelplatte 30 in seinem Innenraum die Aufnahmekammer 54 für den flüssigen Klebstoff, wobei die Zugkraft dieser Klebeverbindung durch eine Anzahl von die Sockelplatte 30 in den Innenraum hinein durchdringende Fixierschrauben 72 hergestellt wird. Zur Fixierung dieses alternativen Fixierdorns 22' gegenüber dem Mantelteil ist wiederum die Befüllung des Zwischenraums 74 zwischen Fixierdorn 22' und Mantelteil 26 mit Klebstoff vorgesehen. Bei dieser Ausführungsform ist somit der Aufnahmeraum für den Klebstoff in zwei Teilräume, nämlich die Aufnahmekammer 54 einerseits und den Zwischenraum 74 andererseits, unterteilt.

Diese Ausführung ist somit insbesondere dann besonders vorteilhaft, wenn eine besonders weitgehende Kompensationsmöglichkeit bei der Positionierung der Bauteile in der Art eines besonders weitgehenden Toleranzausgleichs gewünscht oder erforderlich ist. Die Aufteilung in "Z-Ausgleich" einerseits und "X-Y-Ausgleich" andererseits erfolgt hierbei durch Längsverschiebung des eingebrachten Fixierdorns 22' innerhalb des Mantelteils 26 einerseits und Aufsetzen des Montagetellers 70 auf die Sockelplatte 30 andererseits. Ein evtl. noch notwendiger leichter Winkelausgleich kann dabei durch die Klebefuge zwischen dem Montageteller 70 und der Sockelplatte 30 erfolgen.

Als Montagehilfe ist zudem ein Haltedraht vorgesehen. Im unteren Teil des Rohres befindet sich zudem zwischen Innenrohr und Außenrohr eine Dichtungsbuchse. Diese ist vorzugsweise hinsichtlich Materialwahl und Dimensionierung derart ausgeführt, dass sie bei der Montage festsitzend eingepresst wird, das Innenrohr aber leicht gleiten kann, ggf. bei senkrechter Haltung alleine schwerkraftbedingt die untere Position annimmt. Das Herausfallen wird in dieser Ausführung durch den Haltedraht verhindert. Dieses Konzept zeichnet sich insbesondere auch durch geringeren Klebstoffverbrauch aus, da nicht über "Volumen" korrigiert wird.

In einer alternativen vorteilhaften Ausgestaltung kann das System auch ohne den Haltedraht ausgeführt sein. In dieser Version ist die Dichtungsbuchse, insbesondere im Hinblick auf Dimensionierung und/oder Materialwahl, derart ausgeführt, dass sie vergleichsweise fest im Außenrohr sitzt, aber vergleichsweise leicht auf dem Innenrohr gleiten kann. Der Kraft- bzw. Reibschluss der Dichtungsbuchse zum Innenrohr ist bei dieser Ausführung aber derart bemessen, dass ein beispielsweise schwerkraftbedingtes Herausfallen vermieden ist.

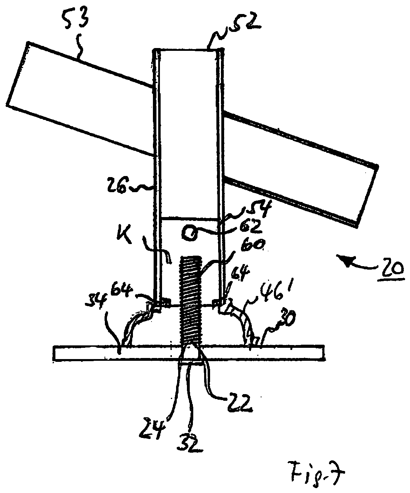

Eine alternative Ausführungsform des Pufferelements 46' des Befestigungssystems 20 ist in FIG. 7 im Querschnitt gezeigt. Bei ansonsten gleich gehaltenen Komponenten des Befestigungssystems 20 ist dort das Pufferelement 46' hinsichtlich seiner Raumform in der Art einer Glocke oder Stulpe ausgestaltet. Wie der Querschnittsdarstellung gem. FIG. 7 entnehmbar ist, ist das Pufferelement 46' in dieser Ausführungsform in der Art eines Kanals mit sich in Längsrichtung aufweitendem Querschnitt ausgeführt. Bei einer derartigen Formgebung werden die Anforderungen, insbesondere bezüglich der Verformbarkeit, hinsichtlich Abdichtung, Ausgleich der Toleranzen, vergleichsweise gering gehaltenen Restkräften und dergleichen, in erster Linie über die Geometrie des Pufferelements 46' und ggf. zusätzlich noch über dessen Materialwahl erfüllt. Bei geeignet flexiblem Material kann dabei infolge der Formgebung die Aufnahme von Längs- und auch Querkräften über eine geeignete Verformung der Kanalwand sichergestellt werden, ohne dass dies in zu großen Rückstellkräften in den Endbereichen des Pufferelements 46' resultieren würde.

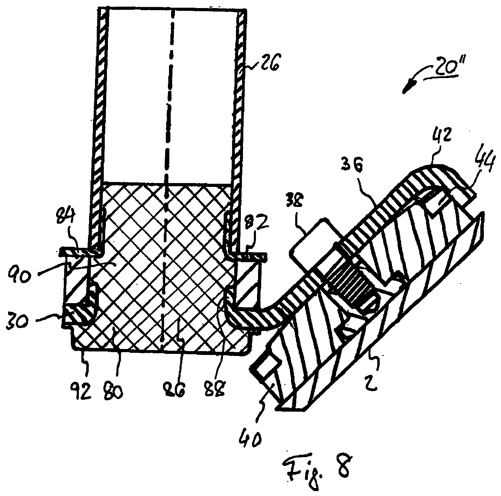

In FIG. 8 ist im Querschnitt ein alternatives Befestigungssystem 20" gezeigt, das unter Verzicht auf den Fixierdorn 22 ausgeführt sein kann. Bei diesem Befestigungssystem ist vorgesehen, dass der durch Aushärten des Klebstoffs entstehende Verbindungskörper 80 die kraft- und momentenseitige Verbindung der Bauteile miteinander bewirkt. Die Bauteile sind dabei derart ausgestaltet, dass der durch Aushärten des Klebstoffs entstehende, in seiner Formgebung durch die Formgebung des Aufnahmebehälters 54 definierte Verbindungskörper 80 beidseitig stempelförmig konturiert und somit sowohl mit dem Mantelteil 26 als auch mit der Sockelplatte 30 formschlüssig verbunden ist.

Dazu ist einerseits das Mantelteil 26, das beispielsweise als Vierkantrohr ausgeführt sein kann, an seinem die Mündung des Aufnahmekanals bildenden freien Ende mit einem Formkörper 82, beispielsweise einer eingeschweißten oder eingepressten tiefgezogenen Buchse, versehen. Dieser weist einen im Vergleich zum Innenquerschnitt des Aufnahmekanals kleineren Innenquerschnitt auf, so dass im Bereich des Übergangs vom Formkörper 82 in den Aufnahmekanal hinein eine Hinterschneidung entsteht. Der Formkörper 82 erzeugt somit im Aufnahmekanal eine Querschnittsverengung im Mündungsbereich, so dass beim Verbindungskörper 80 in diesem Bereich ein Formschluss erzeugt wird. Der außen liegende Teil des Formkörpers 82 ist zudem mit einem umlaufenden Kragen 84 versehen, der bei der Montage des Systems auf das Pufferelement 46 drückt und den Fügespalt auch bei Ausnutzung von Toleranzen in x- oder y- Richtung schließt.

Andererseits ist die Sockelplatte 30 in diesem Ausführungsbeispiel als tiefgezogenes oder gedrücktes Bauteil ausgeführt, das im vorgesehenen Kontaktbereich zum Mantelteil 26 eine Durchtrittsöffnung 86 für den flüssigen Klebstoff aufweist. Die Durchtrittsöffnung 86 ist auf der dem Mantelteil 26 zugewandten Seite der Sockelplatte 30 mit einem nach oben stehenden umlaufenden Kragen 88 versehen, auf dessen Außenseite das in diesem Beispiel als Ring ausgeführte Pufferelement 46 aufgeklebt ist. Durch das vergleichsweise flexible Pufferelement 46 kann auch in diesem Ausführungsbeispiel der Fügespalt auch bei variierenden z-Abständen der miteinander zu verbindenden Teile zuverlässig geschlossen gehalten werden. Das im Ausführungsbeispiel als Schaumstoffelement ausgeführte Pufferelement 46 ist dabei bevorzugt hinsichtlich Materialwahl und Geometrieparametern derart ausgeführt, dass bei maximaler Ausnutzung der Toleranz in Längsrichtung des Aufnahmekanals (z-Richtung) der obere Rand des an der Sockelplatte 30 angeordneten umlaufenden Kragens 88 bis auf Block, also bis zum unmittelbaren mechanischen Kontakt, an die Stirnfläche des umlaufenden Kragens 84 des Formkörpers 82 herangeführt werden kann. Die Restdicke des gestauchten Pufferelements 46 befindet sich dann außerhalb dieses Bereichs. Hierdurch wird erreicht, dass der durch den Spalt 90 zwischen dem umlaufenden Kragen 84 und dem umlaufenden Kragen 88 definierte freie Vergußquerschnitt in z-Richtung möglichst kurz gehalten werden kann, so dass einer Optimierung der Materialbelastung Rechnung getragen werden kann.

Um den als Vergußform für den flüssigen Klebstoff vorgesehenen Aufnahmebehälter 54 auch in diesem Beispiel nach der vom Mantelteil 26 abgewandten Seite der Sockelplatte 30 hin zuverlässig abzuschließen und auch hier einen Formschluß des Verbindungskörpers 80 mit der Sockelplatte 30 zu schaffen, ist diese auf ihrer vom Mantelteil 26 abgewandten Seite im Bereich der Durchtrittsöffnung 86 mit einer Bodenwanne 92 versehen. Diese weist einen im Vergleich zur Durchtrittsöffnung 86 größeren Innenquerschnitt auf, so dass die gewünschte Hinterschneidung des Verbindungskörpers 80 mit der Sockelplatte 30 entsteht, und kann beispielsweise aus angeschweißtem tiefgezogenem Blech oder auch aus aufgeklebtem Kunststoff oder einem sonstigen geeigneten Material bestehen. Alternativ könnte das aus Sockelplatte 30 und Bodenwanne 92 gebildete Bauteil auch einstückig, beispielsweise als Gusskörper, ausgeführt sein.

### Bezugszeichenliste

- 1: Sonnenkollektormodul
- 2: Spiegelelement
- 4: Traggerüst
- 6: Absorberrohr
- 10: Haltepunkte
- 20, 20': Befestigungssystem
- 22, 22': Fixierdorn
- 24: Schraube
- 26: Mantelteil
- 30: Sockelplatte
- 32: Schraubenkopf
- 34: Kontaktplatte
- 36: Kontaktplatte
- 38: Verbindungsschraube
- 40: Haltelement
- 42: Falz
- 44: Montageanschlag
- 46: Pufferelement
- 48, 50: Komponenten
- 52: rückseitiges Ende
- 54: Aufnahmebehälter
- 60: Schraubgewinde
- 62: Öffnung
- 64: Bördelung
- 70: Montageteller
- 72: Fixierschraube
- 74: Zwischenraum
- 80: Verbindungskörper
- 82: Formkörper
- 84: umlaufender Kragen
- 86: Durchtrittsöffnung
- 88: umlaufender Kragen
- 90: Spalt
- 92: Bodenwanne

## Patentansprüche

1. Sonnenkollektormodul (1) mit einer Mehrzahl von Spiegelelementen (2) und mit einem Traggerüst (4), wobei die Spiegelelemente (2) am Traggerüst (4) über eine Anzahl von Befestigungssystemen (20, 20') befestigt sind, wobei das oder jedes jeweils zum Verbinden eines der Spiegelelemente (2) mit dem Traggerüst (4) vorgesehene Befestigungssystem (20,20') jeweils eine zur Anbringung am Spiegelelement (2) vorgesehene Sockelplatte (30), und ein zur Anbringung am Traggerüst (4) vorgesehenes, einen Aufnahmekanal für einen Verbindungskörper (80) bildendes Mantelteil (26) umfasst, das gemeinsam mit der Sockelplatte (30) einen Aufnahmebehälter (54) für flüssigen Klebstoff bildet, wobei das oder jedes Befestigungssystem (20, 20') jeweils ein zur Anbringung zwischen Mantelteil (26) und Sockelplatte (30) vorgesehenes Pufferelement (46, 46') aus im Vergleich zum Material der Sockelplatte (30) und/oder des Mantelteils (26) elastischerem Material umfasst.

2. Sonnenkollektormodul (1) nach Anspruch 1, bei dem die Sockelplatte (30) jeweils mit einem aufragenden Fixierdorn (22, 22') versehen ist, wobei das Mantelteil (26) erst bei in den Aufnahmekanal eingebrachtem Fixierdorn (22, 22') den Aufnahmebehälter (54) bildet.

3. Sonnenkollektormodul (1) nach Anspruch 2, bei dem der Fixierdorn (22, 22') eine Oberflächenkonturierung, vorzugsweise in Form eines Schraubengewindes, aufweist.

4. Sonnenkollektormodul (1) nach Anspruch 2 oder 3, bei dem das Mantelteil (26) auf seiner den Aufnahmekanal für den Fixierdorn (22, 22') bildenden Innenoberfläche mit einer Oberflächenkonturierung versehen ist.

5. Sonnenkollektormodul (1) nach einem der Ansprüche 2 bis 4, bei dem der Fixierdorn (22, 22') aus einem im Vergleich zum Mantelteil (26) weicheren Material besteht.

6. Sonnenkollektormodul (1) nach einem der Ansprüche 1 bis 5, bei dem der im Mantelteil vorgesehene Aufnahmekanal einen Hinterschneidungsbereich mit im Vergleich zum der Sockelplatte (30) zugewandten Mündungsbereich vergrößertem Innenquerschnitt aufweist.

7. Sonnenkollektormodul (1) nach einem der Ansprüche 1 bis 6, bei dem die Sockelplatte (30) im vorgesehenen Kontaktbereich für das Mantelteil (26) eine Durchtrittsöffnung (86) für den flüssigen Klebstoff aufweist und auf ihrer vom Mantelteil (26) abgewandten Seite im Bereich der Durchtrittsöffnung (86) mit einer Bodenwanne (92) versehen ist.

8. Sonnenkollektormodul (1) nach einem der Ansprüche 1 bis 7, bei dem das Mantelteil (26) im Endbereich des Aufnahmebehälters (54) mit einer Querschnittsverengung für den Aufnahmekanal versehen ist.

9. Sonnenkollektormodul (1) nach einem der Ansprüche 1 bis 9, bei das Pufferelement (46) jeweils mehrkomponentig ausgeführt ist, wobei eine erste Komponente (48) des Pufferelements (46) im Vergleich zu einer zweiten Komponente (50) eine geringere Elastizität oder Verformbarkeit und eine höhere Dichte aufweist.

10. Sonnenkollektormodul (1) nach einem der Ansprüche 1 bis 9, bei dem das oder jedes Pufferelement (46') in der Form einer Glocke oder Stulpe ausgeführt ist.

11. Sonnenkollektormodul (1) nach einem der Ansprüche 1 bis 10, bei dem die oder jede Sockelplatte (30) zusätzlich zu einer ersten, zur Verbindung mit dem Mantelteil (26) vorgesehenen Kontaktplatte (34) zur Anbringung an dem jeweiligen Spiegelelement (2) eine weitere Kontaktplatte (36) umfasst.

12. Sonnenkollektormodul (1) nach Anspruch 11, bei dem die weitere Kontaktplatte (36) abgewinkelt an der ersten Kontaktplatte (34) angebracht ist.

13. Sonnenkollektormodul (1) nach Anspruch 11 oder 12, bei dem die weitere Kontaktplatte (36) einen Montageanschlag (44) aufweist.

14. Verfahren zur Herstellung eines Sonnenkollektormoduls (1) nach einem der Ansprüche 1 bis 13, bei dem zunächst einerseits die Sockelplatte (30) am Spiegelelement (2) und andererseits das Mantelteil (26) am Traggerüst (4) angebracht werden und anschließend eine Justierung von Spiegelelement (2) und Traggerüst (4) relativ zueinander derart vorgenommen wird, dass das Mantelteil (26) gemeinsam mit der Sockelplatte (30) einen Aufnahmebehälter (54) für flüssigen Klebstoff bildet, der sodann mit flüssigem Klebstoff befüllt wird.

## Claims

1. Solar collector module (1) comprising a plurality of mirror elements (2) and comprising a support frame (4), wherein the mirror elements (2) are fastened to the support frame (4) via a number of fastening systems (20, 20'), wherein the or each fastening system (20, 20') provided in each case for connecting one of the mirror elements (2) to the support frame (4) in each case comprises a base plate (30) provided for attachment to the mirror element (2), and comprises a casing portion (26) that is provided for attachment to the support frame (4) and that forms a receiving channel for a connecting body (80), which casing portion forms, together with the base plate (30), a receptacle (54) for liquid adhesive, wherein the or each fastening system (20, 20') in each case comprises a buffer element (46, 46') provided for attachment between the casing portion (26) and the base plate (30) and made from a more elastic material than the material used for the base plate (30) and/or casing portion (26).

2. Solar collector module (1) according to claim 1, wherein the base plate (30) is in each case provided with an upwardly projecting locking pin (22, 22'), the casing portion (26) only forming the receptacle (54) when the locking pin (22, 22') in inserted in the receiving channel.

3. Solar collector module (1) according to claim 2, wherein the locking pin (22, 22') has a contoured surface, preferably in the form of a screw thread.

4. Solar collector module (1) according to either claim 2 or claim 3, wherein the casing portion (26) is provided with a contoured surface on the inner surface thereof, which forms the receiving channel for the locking pin (22, 22').

5. Solar collector module (1) according to any of claims 2 to 4, wherein the locking pin (22, 22') is made of a softer material than the casing portion (26).

6. Solar collector module (1) according to any of claims 1 to 5, wherein the receiving channel provided in the casing portion comprises an undercut region having an enlarged inner cross-section in comparison with the mouth region facing the base plate (30).

7. Solar collector module (1) according to any of claims 1 to 6, wherein the base plate (30) comprises a through-opening (86) for the liquid adhesive in the provided contact region for the casing portion (26), and is provided with a base well (92) in the region of the through-opening (86) on the side of said base plate facing away from the casing portion (26).

8. Solar collector module (1) according to any of claims 1 to 7, wherein the casing portion (26) is provided with a cross-sectional constriction for the receiving channel in the end region of the receptacle (54).

9. Solar collector module (1) according to any of claims 1 to 9, wherein the buffer element (46) is in each case formed of multiple components, a first component (48) of the buffer element (46) having a lower elasticity or deformability and a higher density than a second component (50).

10. Solar collector module (1) according to any of claims 1 to 9, wherein the or each buffer element (46') is designed in the form of a bell or sleeve.

11. Solar collector module (1) according to any of claims 1 to 10, wherein the or each base plate (30) comprises, in addition to a first contact plate (34) provided for connection to the casing portion (26), a further contact plate (36) for attachment to the relevant mirror element (2).

12. Solar collector module (1) according to claim 11, wherein the further contact plate (36) is attached to the first contact plate (34) at an angle.

13. Solar collector module (1) according to either claim 11 or claim 12, wherein the further contact plate (36) comprises an assembly stop (44).

14. Method for producing a solar collector module (1) according to any of claims 1 to 13, wherein, firstly, the base plate (30) is attached to the mirror element (2) and the casing portion (26) is attached to the support frame (4), and then the mirror element (2) and support frame (4) are adjusted relative to one another such that the casing portion (26) forms, together with the base plate (30), a receptacle (54) for liquid adhesive, which receptacle is then filled with liquid adhesive.

## Revendications

1. Module de capteur solaire (1) avec une pluralité d'éléments de miroir (2) et avec une ossature support (4), dans lequel les éléments de miroir (2) sont fixés sur l'ossature support (4) par le biais d'un certain nombre de systèmes de fixation (20, 20'), dans lequel le ou chaque système de fixation (20, 20') respectivement prévu pour le raccordement de l'un des éléments de miroir (2) à l'ossature support (4) comprend respectivement une plaque de socle (30) prévue pour la mise en place sur l'élément de miroir (2), et une partie d'enveloppe (26), prévue pour la mise en place sur l'ossature support (4) et formant un canal de réception pour un corps de raccordement (80), qui forme conjointement avec la plaque de socle (30) un récipient de réception (54) pour de la colle liquide, dans lequel le ou chaque système de fixation (20, 20') comprend respectivement un élément amortisseur (46, 46') prévu pour la mise en place entre la partie d'enveloppe (26) et la plaque de socle (30), en matériau plus élastique comparé au matériau de la plaque de socle (30) et/ou de la partie d'enveloppe (26).

2. Module de capteur solaire (1) selon la revendication 1, dans lequel la plaque de socle (30) est respectivement munie d'un tenon de fixation (22, 22') dressé, dans lequel la partie d'enveloppe (26) ne forme le récipient de réception (54) que lorsque le tenon de fixation (22, 22') est mis en place dans le canal de réception.

3. Module de capteur solaire (1) selon la revendication 2, dans lequel le tenon de fixation (22, 22') présente un contour superficiel, de préférence sous la forme d'un filetage.

4. Module de capteur solaire (1) selon la revendication 2 ou 3, dans lequel la partie d'enveloppe (26) est munie d'un contour superficiel sur sa surface intérieure formant le canal de réception pour le tenon de fixation (22, 22').

5. Module de capteur solaire (1) selon l'une des revendications 2 à 4, dans lequel le tenon de fixation (22, 22') est composé d'un matériau plus tendre comparé à la partie d'enveloppe (26).

6. Module de capteur solaire (1) selon l'une des revendications 1 à 5, dans lequel le canal de réception prévu dans la partie d'enveloppe présente une zone de contre-dépouille avec une section transversale intérieure agrandie comparée à la zone d'embouchure tournée vers la plaque de socle (30).

7. Module de capteur solaire (1) selon l'une des revendications 1 à 6, dans lequel la plaque de socle (30) présente, dans la zone de contact prévue pour la partie d'enveloppe (26), une ouverture de passage (86) pour la colle liquide et, sur son côté éloigné de la partie d'enveloppe (26), est munie d'une cuvette de fond (92) dans la zone de l'ouverture de passage (86).

8. Module de capteur solaire (1) selon l'une des revendications 1 à 7, dans lequel la partie d'enveloppe (26) est, dans la zone d'extrémité du récipient de réception (54), munie d'un rétrécissement de section transversale pour le canal de réception.

9. Module de capteur solaire (1) selon l'une des revendications 1 à 9, dans lequel l'élément amortisseur (46) est respectivement réalisé avec plusieurs composants, dans lequel un premier composant (48) de l'élément amortisseur (46) présente, comparé à un deuxième composant (50), une moindre élasticité ou déformabilité et une densité plus élevée.

10. Module de capteur solaire (1) selon l'une des revendications 1 à 9, dans lequel le ou chaque élément amortisseur (46') est réalisé en forme de cloche ou de manchette.

11. Module de capteur solaire (1) selon l'une des revendications 1 à 10, dans lequel la ou chaque plaque de socle (30) comprend, en plus d'une première plaque de contact (34) prévue pour le raccordement à la partie d'enveloppe (26), une autre plaque de contact (36) pour la mise en place sur l'élément de miroir (2) respectif.

12. Module de capteur solaire (1) selon la revendication 11, dans lequel l'autre plaque de contact (36) est mise en place sur la première plaque de contact (34) en faisant un angle.

13. Module de capteur solaire (1) selon la revendication 11 ou 12, dans lequel l'autre plaque de contact (36) présente une butée de montage (44).

14. Procédé de fabrication d'un module de capteur solaire (1) selon l'une des revendications 1 à 13, dans lequel d'abord, d'une part, la plaque de socle (30) est mise en place sur l'élément de miroir (2) et, d'autre part, la partie d'enveloppe (26) est mise en place sur l'ossature support (4), et ensuite un ajustement de l'élément de miroir (2) et de l'ossature support (4) l'un par rapport à l'autre est entrepris de telle sorte que la partie d'enveloppe (26) forme conjointement avec la plaque de socle (30) un récipient de réception (54) pour de la colle liquide qui peut ensuite être rempli de colle liquide.
